(19) Europäisches Patentamt
European Patent Office
Office européen des brevets

(11) Veröffentlichungsnummer: **0 170 075**
**B1**

(12) # EUROPÄISCHE PATENTSCHRIFT

(45) Veröffentlichungstag der Patentschrift: **08.03.89**

(51) Int. Cl.⁴: **C 08 G 59/50**, C 08 J 3/24, C 08 J 5/24

(21) Anmeldenummer: **85108151.3**

(22) Anmeldetag: **01.07.85**

(54) **Härtbare Zusammensetzungen auf Basis von Epoxidharzen.**

(30) Priorität: **05.07.84 DE 3424700**

(43) Veröffentlichungstag der Anmeldung:
**05.02.86 Patentblatt 86/6**

(45) Bekanntmachung des Hinweises auf die Patenterteilung:
**08.03.89 Patentblatt 89/10**

(84) Benannte Vertragsstaaten:
**CH DE FR GB IT LI NL**

(56) Entgegenhaltungen:
**DE-A-1 545 187**
**FR-A-2 348 955**

**NASA TECH BRIEF, 1976, NTN-77/0879, NASA, Washington, US; "New diamine hardeners for epoxies"**

(73) Patentinhaber: **BASF Aktiengesellschaft, Carl-Bosch- Strasse 38, D-6700 Ludwigshafen (DE)**

(72) Erfinder: **Tesch, Helmut, Dr., Goethestrasse 12, D-6701 Birkenheide (DE)**
Erfinder: **Heym, Manfred, Dr., Bachweg 6, D-6719 Weisenheim (DE)**
Erfinder: **Doerflinger, Walter, Otto- Dill- Strasse 4, D-6710 Frankenthal (DE)**
Erfinder: **Stutz, Herbert, Dr., Im Eichbaeumle, D-7500 Karlsruhe 1 (DE)**
Erfinder: **Neumann, Peter, Dr., Franz- Schubert-Strasse 1, D-6908 Wiesloch (DE)**
Erfinder: **Nissen, Dietmar, Dr., Ziegelhaeuser Landstrasse 31, D-6900 Heidelberg (DE)**
Erfinder: **Schaefer, Gerhard, Dr., Schafrippel 2, D-6900 Heidelberg (DE)**

**EP 0 170 075 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine lagerstabile, härtbare Zusammensetzung aus einem Epoxidharz, einem Härter und einem Beschleuniger, sowie ein Verfahren zur Herstellung von hochtemperaturbeständigen Faserverbundwerkstoffen durch Tränken von Verstärkungsfasern mit dieser härtbaren Zusammensetzung und Aushärten des Harzes.

Bei der Herstellung von Faserverbundwerkstoffen aus Epoxidharzen werden üblicherweise Härter eingesetzt, die im Epoxidharz löslich sind, z. B. Diamine und Dicarbonsäureanhydride. Der Nachteil solcher einphasiger Systeme ist, daß ihre Lagerstabilität bei Raumtemperatur auf einige Tage bis wenige Wochen beschränkt ist. Epoxidharzhärter, die bei Raumtemperatur im Epoxidharz unlöslich sind und erst bei erhöhter Temperatur in Lösung gehen, sind zur Herstellung von lagerstabilen Einkomponentensystemen besonders gut geeignet. Zur Faserimprägnierung wird dabei gewöhnlich eine Lösung von Epoxidharz und Härter in einem Lösungsmittel eingesetzt (JP-A-54 064 599). Diese Arbeitsweise hat den Nachteil, daß nach dem Tränken der Fasern das Lösungsmittel entfernt und zurückgewonnen werden muß. Die Lösungsimprägnierung der Fasern wirkt sich zudem nachteilig auf die Eigenschaften des Laminats aus. Spuren restlichen Lösungsmittels, die aus dem Prepreg nicht entfernt wurden, bewirken eine Porenbildung im Laminat. Weiterhin ist eine ungleichmäßige Verteilung der Fasern im Prepreg festzustellen, was ebenfalls die Qualität des Verbundes beeinträchtigt.

Homogene, lösungsmittelfreie Mischungen aus Epoxidharzen und 4,4'-Diaminodiphenylketon können dadurch hergestellt werden, daß man Mischungen aus dem Epoxidharz und pulverförmigem Diamin herstellt und durch Erwärmen auf Temperaturen oberhalb von 150°C (US-A-3 288 753) oder durch Ultraschallbehandlung zur Lösung bringt (W.T. Hodges and T. L. St. Clair, SAMPE, Quarterly, April 1983, S. 46-50). Dabei setzt jedoch schon eine Reaktion zwischen Epoxidharz und Diamin ein, so daß verhältnismäßig hochviskose Mischungen erhalten werden, die sich nicht mehr zu faserverstärkten Prepregs mit ausreichender Klebrigkeit bei Raumtemperatur verarbeiten lassen.

Versucht man, die Tränkung mit einer Epoxidharz-Schmelze vorzunehmen, in der Diaminpulver üblicher Teilchengröße (d. h. in der Größenordnung von 20 bis 100 µm) dispergiert sind, so werden inhomogene Verbundwerkstoffe mit unbefriedigenden mechanischen Eigenschaften erhalten. Insbesondere bei der Herstellung von Prepregs nach dem Harzfilmtransferverfahren, wo ein dünner Schmelzefilm von ca. 80 - 100 µm auf ein Trägerpapier aufgebracht und in diesen Film die Verstärkungsfasern eingedruckt werden, sind die Nachteile grobdisperser Partikel in der Epoxidharz-Schmelze deutlich. Es wird kein homogener Schmelzefilm gebildet, wodurch eine gleichmäßige Fasertränkung unmöglich ist.

Die Qualität von Verbundwerkstoffen mit Epoxidharzmatrix und grobkristallinen Härterteilchen wird weiterhin dadurch beeinträchtigt, daß die chemische Reaktion zwischen Epoxidharz und Härter an der Phasengrenzfläche durch den Übergang des Systems vom flüssigen in den glasartigen Zustand zum Stillstand kommt, bevor die großen Härterkristalle reagieren konnten.

Erfindung lag die Aufgabe zugrunde, eine lagerstabile, im wesentlichen lösungsmittelfreie härtbare Zusammensetzung auf Basis eines Epoxidharzes und eines aromatischen Diamins als Härter bereitzustellen. Ein weiteres Ziel der Erfindung war, Faserverbundwerkstoffe auf Basis von Epoxidharzen herzustellen, wobei als Härter im Epoxidharz bei niedrigen Temperaturen unlösliche, Ketogruppen enthaltende aromatische Diamine eingesetzt werden sollen. Die erhaltenen Werkstoffe sollen ein hohes mechanisches Niveau und eine gute Wärmeformbeständigkeit aufweisen.

Gegenstand der Erfindung ist eine lagerstabile, im wesentlichen lösungsmittelfreie härtbare Zusammensetzung aus

A 100 Gew.-Teilen eines Epoxidharzes

B 10 bis 100 Gew.-Teilen eines $-\overset{\overset{O}{\|}}{C}-$-Gruppen enthaltenden aromatischen Diamins und gegebenenfalls

C 0,01 bis 5 Gew.-Teilen eines Beschleunigers,

wobei der Epoxidharzhärter im Epoxidharz fein dispergiert ist und mindestens 90 Vol.-% der Teilchen eine Teilchengröße unterhalb von 10 µm aufweisen.

Epoxidharze sind nieder- und hochmolekulare Verbindungen mit end- oder seitenständigen oder in cyclische Systeme eingebauten Epoxidgruppen. Sie können flüssig, halbfest oder fest sein. Bevorzugt sind Verbindungen, die mehr als eine Epoxidgruppe pro Molekül enthalten. Bevorzugte Epoxidharze sind Umsetzungsprodukte von mehrfach funktionellen Alkoholen, Phenolen, cycloaliphatischen Carbonsäuren, aromatischen Aminen oder Aminophenolen mit Epichlorhydrin, sowie cycloaliphatische Epoxide und cycloaliphatische Epoxidester. Es können auch Mischungen von verschiedenen Epoxidharzen zum Einsatz kommen. Besonders bevorzugt sind Bisphenol-A-Diglycidylether, Tetraglycidyldiaminodiphenylmethan und epoxidierte Novolake. Die Harze können die üblichen Verdünnungsmittel, wie Phenylglycidylether oder Butylglycidylether enthalten.

Die härtbare Zusammensetzung enthält auf 100 Gew.-Teile Epoxidharz 10 bis 100, vorzugsweise 20 bis 60 Gew.-Teile des Epoxidharzhärters, der im Epoxidharz als pulverförmiger, unlöslicher Feststoff dispergiert ist und vorzugsweise eine mittlere Teilchengröße unterhalb von 10 µm, insbesondere unterhalb von 5 µm aufweist,

d. h. mehr als 90 %, insbesondere mehr als 95 % der Teilchen haben einen Durchmesser von weniger als 10, vorzugsweise weniger als 5 µm. Ein derart feinteiliges Pulver kann z. B. hergestellt werden, indem man ein gröberes Pulver in einer Luftstrahlmühle vermahlt. Das Einmischen des feinteiligen Pulvers in das Epoxidharz erfolgt in Mischaggregaten, die mit Dissolverscheibenrührern ausgestattet sind. Man kann aber auch eine Naßmahlung vornehmen, indem man das gröbere Pulver in Gegenwart des flüssigen Epoxidharzes in einer Rührwerkskugelmühle vermahlt. Dabei wird die zur Imprägnierung der Verstärkungsfasern verwendete Mischung im Gegensatz zur Trockenmahlung und anschließender Dispergierung in einem Arbeitsgang hergestellt. Die Dispergierung des trocken gemahlenen Pulvers bzw. die Naßmahlung in einer Rührwerkskugelmühle erfolgen bei Temperaturen, bei denen der Härter noch nicht oder allenfalls zu einem sehr geringen Anteil im Epoxidharz in Lösung geht.

Geeignete Epoxidharzhärter sind $-\overset{\overset{O}{\|}}{C}-$Gruppen enthaltende aromatische Diamine, die im jeweiligen Epoxidharz bei niedrigen Temperaturen unlöslich sind. Bevorzugt sind Diamine der Formel

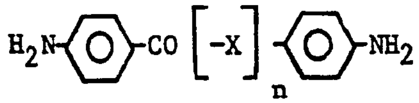

mit n = 0 oder 1 und X = 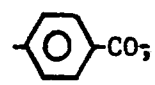 ; 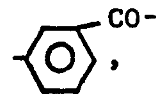 ,

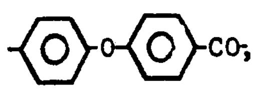 ; 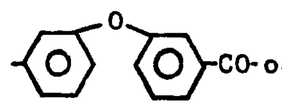 oder 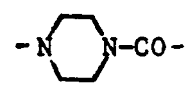

insbesondere 4,4'-Diaminodiphenylketon.

Es können auch Mischungen dieser Diamine, sowie Mischungen der erfindungsgemäßen Diamine mit untergeordneten Mengen anderer, vorzugsweise aromatischer Diamine eingesetzt werden, z. B. mit 4,4'-Diaminodiphenylmethan oder 4,4'-Diaminodiphenylsulfon. Solche Härtermischungen sind z. B. dann von Vorteil, wenn die Viskosität der Mischung Epoxidharz und dem unlöslichen Diamin für die Prepreg-Herstellung zu niedrig ist, d. h. wenn das Prepreg eine zu hohe Klebrigkeit aufweist. In diesem Fall kann durch Zusatz geringer Mengen an löslichen Diaminen, die bei niedriger Temperatur mit dem Epoxidharz reagieren, die geeignete Konsistenz des Harzes eingestellt werden.

Die härtbare Mischung enthält ferner gegebenenfalls 0,01 bis 5, vorzugsweise 0,1 bis 2 Gew.-Teile, bezogen auf 100 Gew.-Teile Epoxidharz, eines Härtungsbeschleunigers. Als solche sind z. B. Bortrifluoridmonoethylamin oder Salicylsäure geeignet. Ist neben dem Härter auch der Beschleuniger im Epoxidharz unlöslich, sollten auch diese Partikel einen Durchmesser von weniger als 5 µm haben.

Die härtbaren Zusammensetzungen können noch übliche Zusatzstoffe, wie Pigmente, Füllstoffe, Flexibilisierungsmittel, Flammschutzmittel und nichtflüchtige Streckmittel enthalten. Sie sollten möglichst frei von Lösungsmitteln sein, die nach dem Auftragen auf die Verstärkungsfasern wieder entfernt werden müßten. Ein geringer Gehalt an Lösungsmitteln, vorzugsweise von weniger als 5 Gew.-Teilen, insbesondere von weniger als 1 Gew.-Teil, bezogen auf 100 Gew.-Teile Epoxidharz, soll jedoch nicht ausgeschlossen sein. Die härtbaren Mischungen können auch thermoplastische Polymere zur Viskositätserhöhung enthalten. Dadurch wird während der Laminathärtung das Auspressen des Harzes ("bleeding") verhindert.

Die erfindungsgemäßen härtbaren Zusammensetzungen sind zur Herstellung von Formteilen, Klebstoffen und Beschichtungen geeignet, bevorzugt aber für Faserverbundwerkstoffe.

Ein weiterer Gegenstand der Erfindung ist demzufolge ein Verfahren zur Herstellung von Faserverbundwerkstoffen durch Tränken von 70 bis 30 Vol.-% Verstärkungsfasern mit 30 bis 71 Vol.-% der erfindungsgemäßen härtbaren Zusammensetzung. Zu diesem Zweck wird die härtbare Zusammensetzung auf Verstärkungsfasern aufgetragen. Die Fasern können in Form von Endlosfasern, Bändern, Matten, Geweben oder Vliesen vorliegen und aus Glas, Kohlenstoff oder Aramid bestehen.

Die Epoxidharzzusammensetzungen werden durch Wärmezufuhr ausgehärtet. Die Härtungstemperatur richtet sich nach der Art des Epoxidharzes, des Härters und des Beschleunigers. Sie kann in weiten Grenzen zwischen 120 und 250°C vorzugsweise zwischen 150 und 200°C schwanken.

Die in den Beispielen genannten Teile und Prozente beziehen sich auf das Gewicht.

**Beispiele**

1. Luftstrahlmahlung von Aminhärtern.

4,4'-Diaminodiphenylketon(I) wird in einer Spiralstrahlmühle gemahlen. Das Prinzip der Strahlmahlung sowie das Schema einer Strahlmahlanlage sind von Rink und Giersiepen in "Aufbereitungs-Technik" Nr. 9/1971, S. 567-569 beschrieben. Die verwendete Kühle hat eine Mahlkammer von 170 mm Durchmesser und 15 mm Höhe. Der Druck der Injektorluft beträgt 8 bar, der Produktdurchsatz 2 kg/h.

Die Partikelgrößenverteilung nach Mahlung wird mittels Laserbeeugung (Particle Sizer der Firma MALVERN) gemessen. Dazu wird das Pulver in einem Kohlenwasserstoff-Gemisch (Sedisperse - A 11 der Firma COULTOR) 10 min. mit Hilfe eines Ultraschall-Rüssels (P = 125 W) dispergiert.

Partikelgrößenverteilung (Volumensummenverteilung):
95 Vol.-% der Teilchen haben einen Durchmesser von weniger als 3,0 µm,
80 Vol.-% ⩽ 2,1 µm,
65 Vol.-% ⩽ 1,6 µm
50 Vol.-% ⩽ 1,3 µm.
In analoger Weise werden

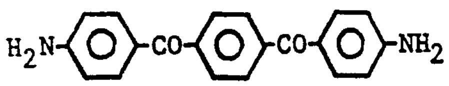 (II)

und 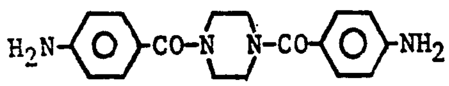 (III)

gemahlen.

Partikelgrößenverteilungen:

| | II | III |
|---|---|---|
| 95 Vol.-% ⩽ | 5,0 µm | 3,4 µm |
| 80 " | 3,3 µm | 2,4 µm |
| 65 " | 2,9 µm | 1,9 µm |
| 50 " | 2,6 µm | 1,5 µm |

2. Herstellung der härtbaren Zusammensetzungen.

Tetraglycidil-Diaminodiphenylmethan (MY 720 von CIBA-GEIGY) wird bei 95°C in einem zylindrischen Mischbehälter (Durchmesser 100 mm), der mit einem schnellaufenden Dissolverscheibenrührer ausgestattet ist (Durchmesser der Dissolverscheibe 30 mm), vorgelegt. Innerhalb von 5 min. wird strahlgemahlenes I (39 Gew.-Teile pro 100 Gew.-Teile MY 720; Partikelgrößenverteilung gemäß Beispiel 1) bei einer Dissolverrührer-Drehzahl von 500 Upm eingemischt. Anschließend wird der Härter bei 95°C und einer Rührerdrehzahl von 2000 Upm 30 min. lang eindispergiert. Danach wird die Mischung entgast und auf Raumtemperatur abgekühlt.

An 10-µm-Rakelungen der Mischungen wird durch Messungen mit dem Bildanalyse-System TAS-plus der Firma LEITZ festgestellt, daß die Korngrößenverteilung des im Epoxidharz dispergierten Härters gut mit der Verteilung des trocken gemahlenen Pulvers übereinstimmt.

Stabilität bei Raumtemperatur-Lagerung:
Die Viskosität steigt innerhalb von 90 Tagen von 78 800 auf nur 80 200 mPas (Messung im Rotationsviskosimeter CONTRAVES 15T bei 50°C) an.

Stabilität bei 80°C-Lagerung:
Innerhalb von 8 h steigt die Viskosität von 3180 auf 3320 mPas an.

Zum Vergleich hergestellte Mischungen aus Epoxidharzen und grobkristallinem I (Korngrößen bis etwa 100 µm) bzw. Epoxidharzen und gelösten Aminhärtern wie 4,4'-Diaminodiphenylsulfon weisen nicht die überlegenen Eigenschaften der beanspruchten Mischung auf: In Mischungen mit grobkristallinen Härterpartikeln sedimentiert der Härter; homogene Filme mit Filmdicken von etwa 50 - 100 µm zur Herstellung von Prepregs (siehe Beispiel 3) werden nicht erhalten. Mischungen mit gelösten Härtern zeigen nicht die guten Stabilitätseigenschaften.

3. Herstellung der Faserverbundwerkstoffe.

Die in Beispiel 2 hergestellte härtbare Mischung wird auf 70°C erwärmt und mittels Rakelvorrichtung auf ein Trägerpapier aufgestrichen. Anschließend werden parallele Kohlenstoffaser-Rovings (T 300 600 x 50B von TORAY) auf den Harzfilm aufgelegt und mittels beheizten Kalandern in das Harz eingedrückt, wobei die Faserstränge luftblasenfrei mit der Harzschmelze getränkt werden.

Das so erhaltene Prepreg (Harzgehalt: 35 Gew.-%) ist mehrere Monate bei Raumtemperatur lagerfähig) ohne daß die Klebrigkeit und Drapierfähigkeit verlorengehen.

Zur Laminatherstellung werden 8 bzw. 16 Prepreglagen mit unidirektionaler Faseranordnung bei Raumtemperatur übereinandergelegt, in ein auf 140°C vorgeheiztes Plattenpreßwerkzeug gelegt und unter einem Druck von 15 bar 2 h vorgehärtet. Anschließend wird das Material bei 180°C 6 h nachgehärtet. Nach dem

Abkühlen wird ein 1 bzw. 2 mm dickes Laminat (Fasergehalt: 60 ± 2 Vol.-%) mit folgenden mechanischen Eigenschaften bei 23°C erhalten (Prüfungen nach DIN 29 971; Zugversuch parallel zur Faserrichtung am 1-mm-Laminat, übrige Prüfungen am 2-mm-Laminat):

| | |
|---|---|
| Zugfestigkeit parallel zur Faserrichtung | 1 490 N/mm$^2$ |
| Zug-Elastizitätsmodul parallel z. F. | 135 030 N/mm$^2$ |
| Bruchdehnung parallel z. F. in Zugversuch | 1,0 % |
| Zugfestigkeit senkrecht zur Faserrichtung | 58 N/mm$^2$ |
| Zug-Elastizitätsmodul senkrecht z. F. | 10 900 N/mm$^2$ |
| Bruchdehnung senkrecht z. F. im Zugversuch | 0,5 % |
| Biegefestigkeit parallel z. F. | 1 730 N/mm$^2$ |
| Biegemodul parallel z. F. | 122 000 N/mm$^2$ |
| Randfaser-Bruchdehnung parallel z. B. | 1,6 % |
| Druckfestigkeit parallel z. F. | 1 390 N/mm$^2$ |
| Druckmodul parallel z. F. | 140 000 N/mm$^2$ |
| Druckstauchung parallel z. F. | 1,3 % |
| Schubfestigkeit in Laminatebene | 99 N/mm$^2$ |
| Schubmodul in Laminatebene | 5 880 N/mm$^2$ |
| Bruchdehnung in Laminatebene | 2,0 % |
| Interlaminare Scherfestigkeit | 92,2 N/mm$^2$ |
| Glasübergangstemperatur (DIN 53 445) | 267°C |

**Patentansprüche**

1. Lagerstabile, im wesentlichen lösungsmittelfreie härtbare Zusammensetzung aus
A 100 Gew.-Teile eines Epoxidharzes
B 10 bis 100 Gew.-Teilen eines

$$-\overset{O}{\overset{\|}{C}}-\text{Gruppen}$$

enthaltenden aromatischen Diamins als Epoxidharzhärter und gegebenenfalls
C 0,01 bis 5 Gew.-Teilen eines Beschleunigers,

dadurch gekennzeichnet, daß der Epoxidharzharter im Epoxidharz fein dispergiert ist, wobei mindestens 90 Vol.-% der Teilchen des Epoxidharzharters eine Teilchengroße unterhalb von 10 µm aufweisen.

2. Härtbare Zusammensetzung nach Anspruch 1, dadurch gekennzeichnet, daß als Epoxidharzhärter ein Dion der Formel

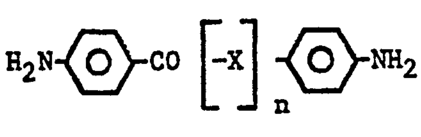

mit n = 0 oder 1 und X = 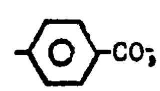 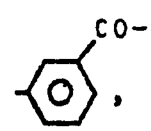,

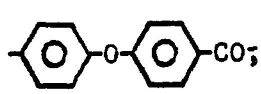 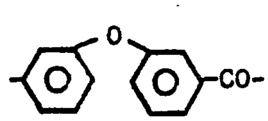 oder 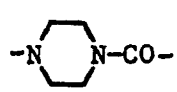

verwendet wird.

3. Härtbare Zusammensetzung nach Anspruch 1, <u>dadurch gekennzeichnet,</u> daß als Epoxidharzhärter 4,4-Diaminodiphenylketon verwendet wird.

4. Härtbare Zusammensetzung nach Anspruch 1, <u>dadurch gekennzeichnet,</u> daß als Epoxidharzhärter ein Diamin der Formel

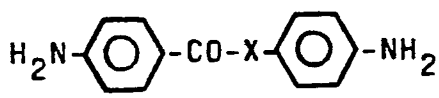

mit X = 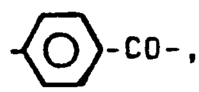, 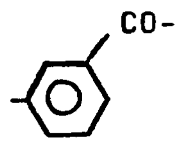,

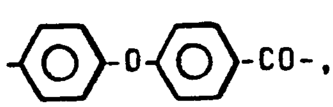, 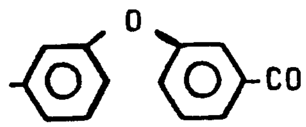 oder 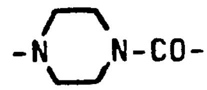

verwendet wird.

5. Härtbare Zusammensetzung nach Anspruch 1, <u>dadurch gekennzeichnet,</u> daß als Epoxidharzhärter 4,4'-Bis-(p-aminobenzoyl)-piperazin verwendet wird.

6. Härtbare Zusammensetzung nach Anspruch 1, <u>dadurch gekennzeichnet,</u> daß als Epoxidharzhärter 4,4'-Bis-(p-aminobenzoyl)-benzol verwendet wird.

7. Verwendung der härtbaren Zusammensetzung nach Anspruch 1 zur Herstellung von Faserverbundwerkstoffen, Klebstoffen, Formteilen und Beschichtungen.

8. Verfahren zur Herstellung von Faserverbundwerkstoffen durch Tränken von 70 bis 30 Vol.-% Verstärkungsfasern mit 30 bis 70 Vol.-% der härtbaren Zusammensetzung nach Anspruch 1.

**Claims**

1. An essentially solvent-free curable composition which has a long shelf life and consists of

A 100 parts by weight of an epoxy resin and

B from 10 to 100 parts by weight of, as a curing agent for the epoxy resin, an aromatic diamine containing

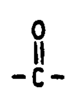

with or without

C from 0.01 to 5 parts by weight of an accelerator, wherein the curing agent for the epoxy resin is finely dispersed in the latter, not less than 90 % by volume of the particles of the curing agent for the epoxy resin having a particle size of less than 10 µm.

2. A curable composition as claimed in claim 1, wherein the epoxy resin curing agent used is a diamine of the formula

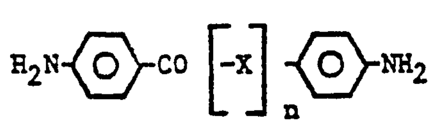

where n is 0 or 1 and X is

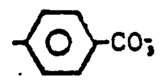 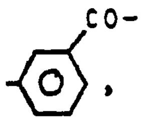 ,

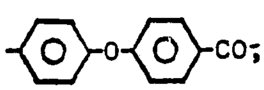 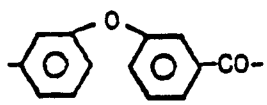 or 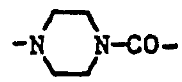

3. A curable composition as claimed in claim 1, wherein the epoxy resin curing agent used is 4,4'-diaminodiphenyl ketone.

4. A curable composition as claimed in claim 1, wherein the epoxy resin curing agent used is a diamine of the formula

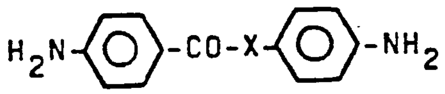

where X is 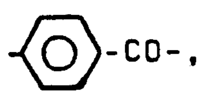 , 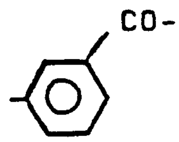 ,

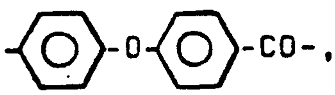 , 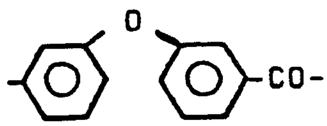 or 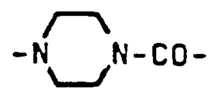

5. A curable composition as claimed in claim 1, wherein the epoxy resin curing agent used is 4,4'-bis-(p-aminobenzoyl)-piperazine.

6. A curable composition as claimed in claim 1, wherein the epoxy resin curing agent used is 4,4'-bis-(p-aminobenzoyl)-benzene.

7. Use of a curable composition as claimed in claim 1 for the production of fiber-reinforced materials, adhesives, moldings and coatings.

8. A process for the preparation of a fiber-reinforced material by impregnation of from 70 to 30 % by volume of reinforcing fibers with from 30 to 70 % by volume of a curable composition as claimed in claim 1.

**Revendications**

1. Composition durcissable, essentiellement exempte de solvant, stable au stockage, de

A 100 parties en poids d'une résine époxy

B 10 à 100 parties en poids d'une diamine aromatique contenant des groupes

$$-\overset{\overset{\displaystyle O}{\|}}{C}-$$

comme durcisseur de résine époxy et éventuellement

C 0,1 à 5 parties en poids d'un accélérateur

caractérisée par le fait que le durcisseur de résine époxy est finement dispersé, au moins 90 % (volumes) des particules du durcisseur de résine époxy possédant une grosseur de particules inférieure à 10 µm.

2. Composition durcissable selon la revendication 1, caractérisée par le fait que, comme durcisseur de résine époxy, on utilise une diamine de formule

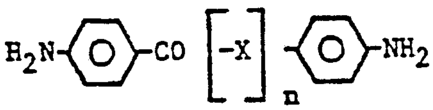

avec n=0 ou 1 et X = 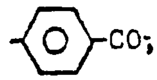 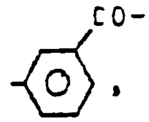,

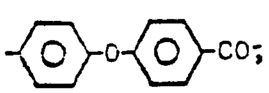 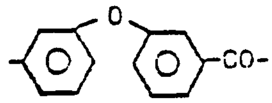 ou 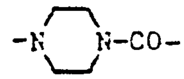

3. Composition durcissable selon la revendication 1, caractérisée par le fait que, comme durcisseur de résine époxy, on utilise la 4,4'-dianinodiphénylcétone.

4. Composition durcissable selon la revendication 1, caractérisée par le fait que, comme durcisseur de résine époxy, on utilise une diamine de formule

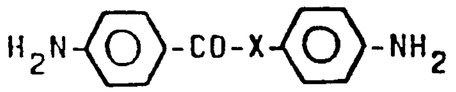

avec X = 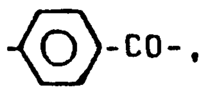, 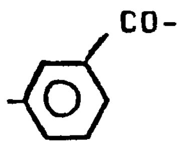,

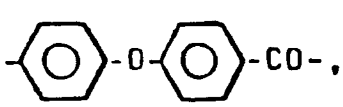, 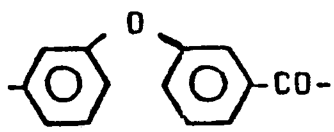 ou 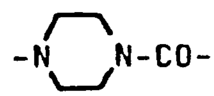

5. Composition durcissable selon la revendication 1, caractérisée par le fait que comme durcisseur de résine époxy, on utilise une 4,4'-bis-(p-aminobenzoyl)-piperazine.

6. Composition durcissable selon la revendication 1, caractérisée par le fait que,comme durcisseur de résine époxy, on utilise le 4,4'-bis-(p-aminobenzoyl)-benzène.

7. Utilisation de la composition durcissable selon la revendication 1 pour la fabrication de matières composites fibreuses, colles, pièces moulées et produits d'enduction.

8. Procédé de fabrication de matières composites fibreuses par imprégnation de 70 à 30 % (volumes) de fibres de renforcement avec 30 à 70 % (volumes) de la composition durcissable selon la revendication 1.